# EUROPEAN PATENT APPLICATION

(11) **EP 1 189 401 A2**
(43) Date of publication of application: **20.03.2002**
(21) Application number: 01307762.3
(22) Date of filing: 12.09.2001
(51) Int. Cl.: H04L 27/26

(54) **Downconvertor for multicarrier signals**

(30) Priority: 18.09.2000 JP 2000282150; 07.06.2001 JP 2001172659
(71) Applicant: ALPS ELECTRIC CO., LTD., Ota-ku Tokyo 145 (JP)
(72) Inventor: Ootaki, Yukio, c/o Alps Electric Co., Ltd, Tokyo 145 (JP)
(74) Representative: Kensett, John Hinton

(57) **Abstract**

The invention has an object of providing a digital orthogonal signal detector (1) of which a circuit configuration is simple, of which an occupied volume is small and of which power consumption can be reduced by using one system of a digital filer and one system of a digital signal delay circuit. The digital orthogonal signal detector according to the invention is composed of a digital signal delay circuit (8) that delays a digital signal output from an analog-to-digital converter (4) for converting a received signal of which the center frequency is not zero from analog to digital at a predetermined sampling frequency and generates an in-phase signal and a digital all-pass filter that shifts a phase of a digital signal by 90° and generates an orthogonal signal, wherein the digital all-pass filter is an infinite impulse response digital filter having a fixed group delay characteristic and the digital signal delay circuit has a signal delay amount equal to a group delay amount of the digital all-pass filter.

## Description

### BACKGROUND OF THE INVENTION

### 1. Field of the Invention

The present invention relates to a digital orthogonal signal detector, particularly relates to a digital orthogonal signal detector that enables generating an orthogonal signal (Q signal) and an in-phase signal (I signal) based upon a digital signal output from an analog-to-digital converter using a digital all-pass filter and a digital signal delay circuit and making simple circuit configuration using only a small number of components to reduce power consumption.

### 2. Description of the Related Art

Recently, in the field of a broadcast, in place of a conventional type ground wave analog broadcast, a ground wave digital broadcast of which the broadcast quality is satisfactory and which can have many broadcast channels has been spotlighted. This broadcast is already started in Western countries, and also in Japan, it is expected to be realized soon.

For a ground wave digital broadcast in Europe and Japan, orthogonal frequency division multiplex (OFDM) is used for the modulation technique of a broadcast wave and in a broadcast receiver that can receive a ground wave digital broadcast (hereinafter called a ground wave digital broadcast receiver), an orthogonality detecting circuit that orthogonally detects an orthogonal frequency division multiplex modulated signal is used.

In the case wherein this type of conventional ground wave digital broadcast receiver orthogonally detects an orthogonal frequency division multiplex modulated signal, it uses a circuit for preparation and the succeeding orthogonal frequency division multiplex detector.

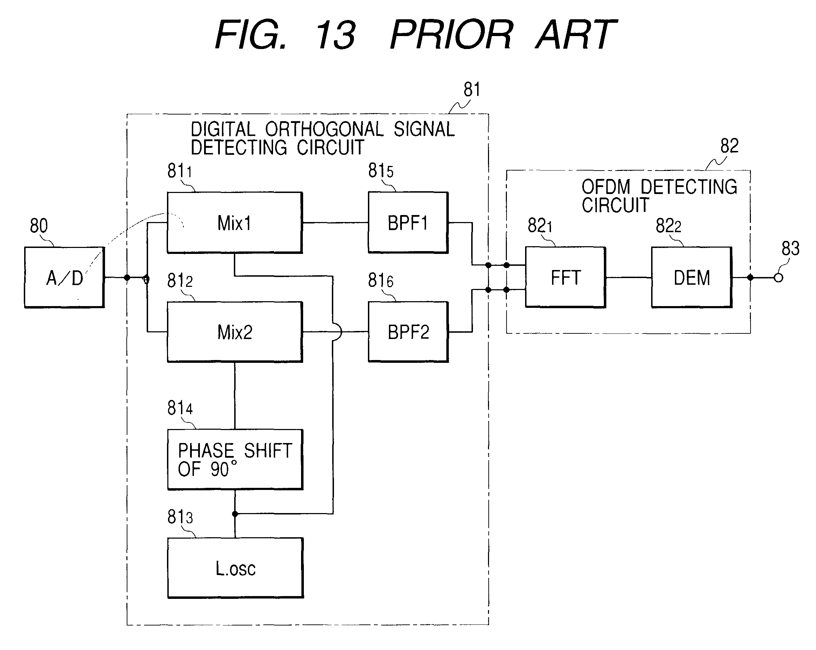

Fig. 13 is a block diagram showing an example of the configuration of a circuit which is used in a well-known ground wave digital broadcast receiver for detecting the orthogonality of an orthogonal frequency division multiplex modulated signal.

As shown in Fig. 13, this orthogonality detecting circuit is composed of a circuit for preparation (hereinafter called a digital orthogonal signal detector) 81 and an orthogonal frequency division multiplex detector (an OFDM detector) 82, an analog-to-digital converter (an A/D converter) 80 is connected on the input side of the digital orthogonal signal detector 81 and the output side of the orthogonal frequency division multiplex detector 82 is connected to a detected signal output terminal 83.

The digital orthogonal signal detector 81 is composed of a first mixer (MIX1) 81₁, a second mixer (MIX2) 81₂, a local oscillator (L. OSC) 81₃, a 90° phase shifter 81₄, a first band-pass filter (BPF1) 81₅ and a second band-pass filter (BPF2) 81₆. The orthogonal frequency division multiplex detector 82 is composed of a fast Fourier transform (FFT) circuit 82₁ and an orthogonal frequency division multiplex demodulator circuit (DEM) 82₂. In this case, the first band-pass filter 81₅ and the second band-pass filter 81₆ are a digital filter and they use an infinite impulse response (FIR) digital filter having a fixed group delay characteristic. These digital filters 81₅ and 81₆ may also be a low-pass filter in place of the band-pass filter.

In the digital orthogonal signal detector 81, the first input terminal of the first mixer 81₁ is connected to the output terminal of the analog-to-digital converter 80, the second input terminal is connected to the output terminal of the local oscillator 81₃ and the output terminal is connected to the input terminal of the first band-pass filter 81₅. The first input terminal of the second mixer 81₂ is connected to the output terminal of the analog-to-digital converter 80, the second input terminal is connected to the output terminal of the 90° phase shifter 81₄ and the output terminal is connected to the input terminal of the second band-pass filter 81₆. The input terminal of the 90° phase shifter 81₄ is connected to the output terminal of the local oscillator 81₃. The output terminal of the first band-pass filter 81₅ is connected to the first input terminal of the fast Fourier transform circuit 82₁ and the output terminal of the second band-pass filter 81₆ is connected to the second input terminal of the fast Fourier transform circuit 82₁. In the orthogonal frequency division multiplex detector 82, the input terminal of the orthogonal frequency division multiplex demodulator circuit 82₂ is connected to the output terminal of the fast Fourier transform circuit 82₁ and the output terminal is connected to the detected signal output terminal 83.

The orthogonality detecting circuit having the abovementioned configuration is substantially operated as follows.

When a ground wave digital broadcast is received by the ground wave digital broadcast receiver, a received signal is amplified by a tuner (not shown), the frequency is converted and the signal is supplied to the analog-to-digital converter 80 as an intermediate frequency signal. The analog-to-digital converter 80 converts the supplied intermediate frequency signal to a digital signal and supplies the digital signal to the digital orthogonal signal detector 81.

In the digital orthogonal signal detector 81, the first mixer 81₁ generates a first frequency mixed signal by mixing the frequency of the digital signal and that of a local oscillated signal from the local oscillator 81₃, the first band-pass filter 81₅ extracts an I signal having a required frequency band from the first frequency mixed signal and supplies the extracted I signal to the fast Fourier transform circuit 82₁. Simultaneously, the second mixer 81₂ generates a second frequency mixed signal by mixing the frequency of the digital signal and that of a local oscillated signal of which the phase is shifted by 90° by the 90° phase shifter 81₄ from the local oscillator 81₃, the second band-pass filter 81₆ extracts a Q signal having a required frequency band from the second frequency mixed signal and supplies the extracted Q signal to the fast Fourier transform circuit 82₁.

In the orthogonal frequency division multiplex detector 82, the fast Fourier transform circuit 82₁ executes a fast Fourier transform process using the supplied I signal and Q signal and supplies a signal acquired by the Fourier transform process to the orthogonal frequency division multiplex demodulator circuit 82₂. The orthogonal frequency division multiplex demodulator circuit 82₂ executes a demodulation process for digital modulation such as quadriphase phase shift keying (QPSK) based upon the supplied signal acquired by Fourier transform and supplies an acquired demodulated signal to the detected signal output terminal 83.

As the abovementioned well-known ground wave digital broadcast receiver uses two digital filters 81₅ and 81₆ in the digital orthogonal signal detector 81 which is an orthogonality detecting circuit, particularly a large-scale infinite impulse response digital filter having a large filter order (the number of signal processing steps) for these digital filters 81₅ and 81₆, many circuit components are required to acquire these digital filters 81₅ and 81₆, a volume occupied by the digital filters 81₅ and 81₆ is increased as much and power consumption in the digital filters 81₅ and 81₆ is also increased as much.

Also, as the well-known ground wave digital broadcast receiver similarly uses four individual circuits of the first mixer 81₁, the second mixer 81₂, the local oscillator 81₃, the 90° phase shifter 81₄ in the digital orthogonal signal detector 81 which is an orthogonality detecting circuit, many circuit components are required to acquire these individual circuits 81₁ to 81₄, volume occupied by the digital orthogonal signal detector 81 is increased as much and power consumption in the digital orthogonal signal detector 81 is also increased as much.

### SUMMARY OF THE INVENTION

The invention is made in view of such a technical background and its object is to provide a digital orthogonal signal detector of which a circuit configuration is simplified, of which an occupied volume is reduced and of which power consumption can be reduced respectively by using one system of a digital filter and one system of a digital signal delay circuit.

To achieve the object, the invention is composed of a digital signal delay circuit that delays a digital signal output from an analog-to-digital converter for converting a received signal of which a center frequency is not zero from analog to digital at a predetermined sampling frequency and generates an in-phase signal (I signal), and a digital all-pass filter that shifts a phase of the digital signal by 90° and generates an orthogonal signal (Q signal), wherein the digital all-pass filter is an infinite impulse response digital filter having a fixed group delay characteristic, and wherein the digital signal delay circuit has a main configuration having a signal delay amount equal to a group delay amount of the digital all-pass filter.

According to the abovementioned main configuration, as the digital orthogonal signal detector is composed of one system of a digital signal delay circuit that generates an I signal and one system of a digital all-pass filter that generates a Q signal and an infinite impulse response digital filter is used for the digital all-pass filter, the digital orthogonal signal detector is acquired in which a number of required circuits is not only greatly reduced as compared with this type of well-known digital orthogonal signal detector but an occupied volume is reduced because of a simple circuit configuration in which a number of components is reduced because an infinite impulse response digital filter of which a filter order (the number of signal processing units) is small is used as compared with a finite impulse response digital filter and power consumption can be reduced.

Also, to achieve the object, the invention is composed of a digital signal delay circuit that delays one of digital signals acquired by thinning out a digital signal output from an analog-to-digital converter for converting a received signal of which a center frequency is not zero from analog to digital at a predetermined sampling frequency into order 2 and generates an in-phase signal, and a digital all-pass filter that shifts the phase of the other of the digital signals thinned out into the order 2 by 90° and generates an orthogonal signal, wherein the digital all-pass filter is an infinite impulse response digital filter having a fixed group delay characteristic, and wherein the digital signal delay circuit has another main configuration having a signal delay amount equal to a group delay amount of the digital all-pass filter.

According to the abovementioned other main configuration, as not only action by the abovementioned main configuration can be expected but a processed digital signal is a digital signal thinned out into the order 2 and the operational rate of the digital signal delay circuit and the digital all-pass filter is reduced, power consumption can be reduced even further as compared with the degree of reduction of power consumption which can be expected by the main configuration.

The abovementioned main configuration and the abovementioned other main configuration can have a first configuration wherein three or more cascaded arbitrary n (n: integer) pieces of signal processing units in the infinite impulse response digital filter are respectively provided with a first delay unit, a second delay unit, an adding unit, a multiplying unit and a multiplication coefficient generating unit, and wherein a constant of each unit is set so that a number of phase gradients in a signal band having 1/4 of the sampling frequency in the center is "n - 1".

According to the first configuration, a phase difference between a Q signal output from one infinite impulse response digital filter and an I signal output from the digital signal delay circuit can be in a slight range of variation in a required frequency band and the digital orthogonal signal detector having a satisfactory conversion characteristic in addition to a function acquired by the abovementioned main configuration can be acquired.

Further, it is suitable that the first configuration has a second configuration that signal processing units equivalent to odd ordinals from the output side out of the cascaded n pieces of signal processing units are respectively composed of only a first delay unit and a second delay unit.

According to the second configuration, as the adding unit, the multiplying unit and the multiplication coefficient generating unit of each of the signal processing units equivalent to odd ordinals from the output side out of the cascaded n pieces of signal processing units are respectively omitted and the signal processing unit is composed of only the first delay unit and the second delay unit, a digital orthogonal signal detector can be acquired in which the number of components is reduced duet to the omission of the adding unit, the multiplying unit and the multiplication coefficient generating unit to result in a simple circuit configuration, thereby, an occupied volume is more reduced and power consumption can be reduced even further.

It is desirable that the first configuration has a third configuration that the cascaded n pieces of signal processing units, when thinning out the output of the infinite impulse response digital filter into the order 2, selects 1/2 of a sampling frequency as the operational frequency of the infinite impulse response digital filter and cascaded n pieces of signal processing units are composed of only signal processing units equivalent to even ordinals from the output side.

According to the third configuration, as all the signal processing units equivalent to odd ordinals from the output side out of cascaded n pieces of signal processing units are omitted and the cascaded n pieces of signal processing units are composed of only signal processing units equivalent to even ordinals from the output side, a digital orthogonal signal detector is acquired in which the number of components is greatly reduced by the number of the omitted signal processing units equivalent to odd ordinals, further simple circuit configuration, thereby, an occupied volume is greatly reduced and power consumption can be greatly reduced can be acquired.

An embodiment of the present invention will now be described, by way of example only, with reference to the accompanying diagrammatic drawings, in which:
Fig. 1 shows a first embodiment of a digital orthogonal signal detector according to the invention and is a block diagram showing the configuration of the main part of a ground wave digital broadcast receiver including the digital orthogonal signal detector;
Fig. 2 shows a second embodiment of the digital orthogonal signal detector according to the invention and is a block diagram showing the configuration of the main part of a ground wave digital broadcast receiver including the digital orthogonal signal detector;
Fig. 3 is a circuit diagram showing a first example of the concrete configuration of an infinite impulse response digital filter 7 used for the digital orthogonal signal detectors shown in Figs. 1 and 2;
Fig. 4 is an explanatory drawing for explaining a state of the variation of a phase in the infinite impulse response digital filter;
Fig. 5 is an explanatory drawing for explaining a group delay characteristic of the infinite impulse response digital filter and also shows the delay characteristic of a digital signal delay circuit;
Fig. 6 is a characteristic drawing showing a state of the variation of a phase when the number of phase gradients in a frequency band in the infinite impulse response digital filter is varied;
Fig. 7 is a characteristic drawing showing a state of the variation of phase difference in the frequency band in the infinite impulse response digital filter shown in Fig. 6;
Fig. 8 is a characteristic drawing showing a state of the variation of group delay when the number of phase gradients is a parameter in the infinite impulse response digital filter;
Fig. 9 is a list showing an example of coefficient values set by a multiplication coefficient generating unit when the number of caused phase gradients and the number of arranged signal processing units are determined in the infinite impulse response digital filter;
Fig. 10 is a list showing phase gradients, the number of coefficients and relation between each coefficient and its coefficient value respectively shown in Fig. 9 in a more general state;
Fig. 11 is a circuit diagram showing a second example of the concrete configuration of the infinite impulse response digital filter used in the digital orthogonal signal detector shown in Figs. 1 and 2;
Fig. 12 is a circuit diagram showing a third example of the concrete configuration of the infinite impulse response digital filter used in the digital orthogonal signal detector shown in Figs. 1 and 2; and
Fig. 13 is a block diagram showing one example of the configuration of a circuit for detecting the orthogonality of an orthogonal frequency division multiplex modulated signal used in a well-known ground wave digital broadcast receiver.

### DETAILED DESCRIPTION OF THE PREFERRED EMBODIMENTS

Referring to the drawings, embodiments of the invention will be described below.

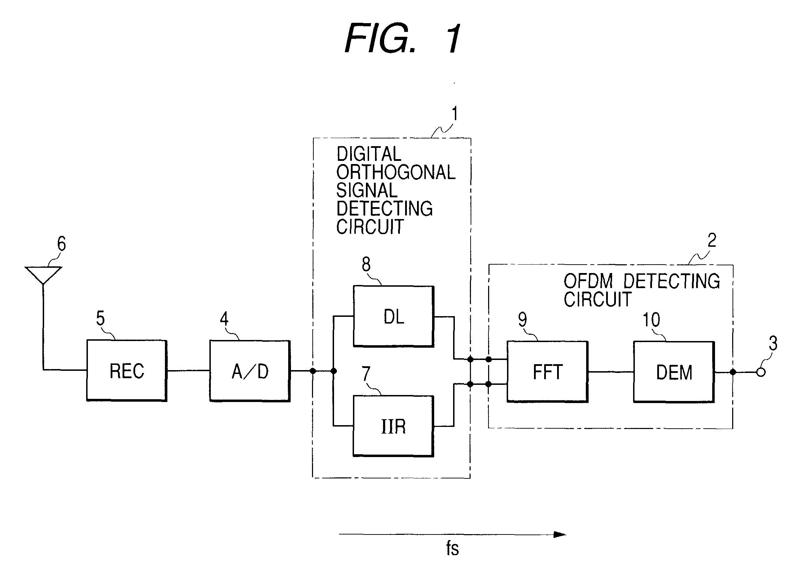

Fig. 1 shows a first embodiment of a digital orthogonal signal detector according to the invention and is a block diagram showing the configuration of the main part of a ground wave digital signal broadcast receiver including the digital orthogonal signal detector.

As shown in Fig. 1, the ground wave digital signal broadcast receiver provided with the digital orthogonal signal detector equivalent to the first embodiment is composed of a digital orthogonal signal detector 1, an orthogonal frequency division multiplex detector (an OFDM detector) 2, a detected signal output terminal 3, an analog-to-digital converter (an A/D converter) 4, a tuner (REC) 5 and a receiving antenna 6.

In this case, the digital orthogonal signal detector 1 is composed of an infinite impulse response digital filter (IIR) 7 and a digital signal delay circuit (DL) 8. The orthogonal frequency division multiplex detector 2 is composed of a fast Fourier transform (FFT) circuit 9 and an orthogonal frequency division multiplex demodulator circuit (DEM) 10. The infinite impulse response digital filter 7 shifts the phase of an input digital signal by 90° and the digital signal delay circuit 8 applies signal delay equivalent to the signal group delay amount of the infinite impulse response digital filter 7 to an input digital signal.

The input terminal of the tuner 5 is connected to the receiving antenna 6 and the output terminal is connected to the input terminal of the analog-to-digital converter 4. In the digital orthogonal signal detector 1, the input terminal of the infinite impulse response digital filter 7 is directly connected to the output terminal of the analog-to-digital converter 4 and the output terminal is connected to a first input terminal of the fast Fourier transform circuit 9. The input terminal of the digital signal delay circuit (DL) 8 is directly connected to the output terminal of the analog-to-digital converter 4 and the output terminal is connected to a second input terminal of the fast Fourier transform circuit 9. In the orthogonal frequency division multiplex detector 2, the input terminal of the orthogonal frequency division multiplex demodulator circuit 10 is connected to the output terminal of the fast Fourier transform circuit 9 and the output terminal is connected to the detected signal output terminal 3.

The ground wave digital signal broadcast receiver having the abovementioned configuration is operated as follows.

When the receiving antenna 6 receives a ground wave digital broadcast signal, the digital broadcast signal is supplied to the tuner 5 as a received signal. After the tuner 5 amplifies the received signal, it generates a frequency mixed signal by mixing the frequency of the amplified received signal and that of a local oscillation signal, an intermediate frequency (IF) signal is extracted from the generated frequency mixed signal and the acquired intermediate frequency signal is supplied to the analog-to-digital converter 4. The analog-to-digital converter 4 converts the supplied intermediate frequency signal from analog to digital, respectively outputs a digital signal (a sampling frequency fs) from the output terminal and supplies it to the digital orthogonal signal detector 1.

In the digital orthogonal signal detector 1, the infinite impulse response digital filter 7 generates a Q signal by shifting the phase of the supplied digital signal by 90° and supplies the generated Q signal to the orthogonal frequency division multiplex detector 2. The digital signal delay circuit 8 generates an I signal by delaying the supplied digital signal by a signal delay amount equal to a signal group delay amount applied to a digital signal acquired by shifting the phase of the supplied digital signal by 90° in the infinite impulse response digital filter 7 and supplies the generated I signal to the orthogonal frequency division multiplex detector 2.

In the orthogonal frequency division multiplex detector 2, the fast Fourier transform circuit 9 executes a fast Fourier transform process using the supplied I signal and Q signal and supplies a signal to which Fourier transform is applied to the orthogonal frequency division multiplex demodulator circuit 10. The orthogonal frequency division multiplex demodulator circuit 10 executes processing for demodulating the supplied signal to which Fourier transform is applied for digital modulation such as quadriphase phase shift keying (QPSK) and supplies the acquired demodulated signal to the detected signal output terminal 3.

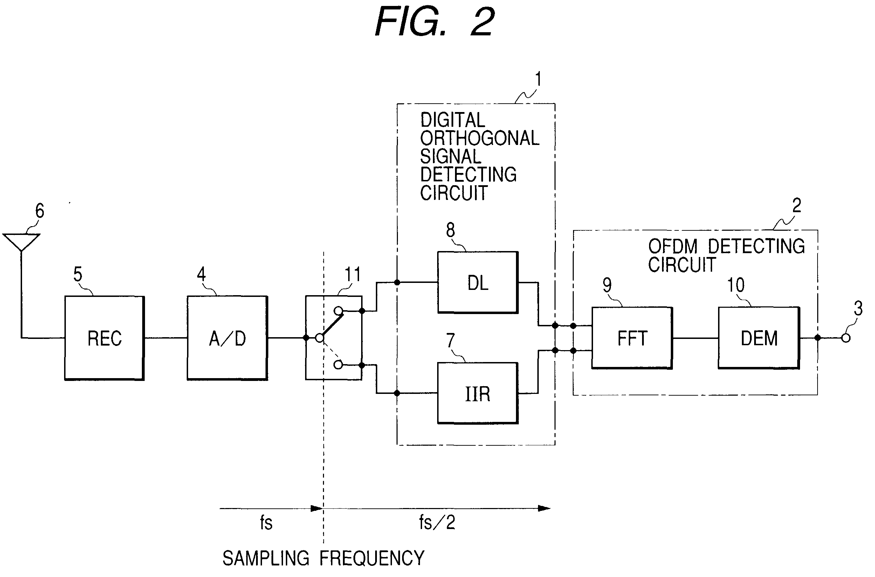

Next, Fig. 2 shows a second embodiment of the digital orthogonal signal detector according to the invention and is a block diagram showing the configuration of the main part of a ground wave digital signal broadcast receiver including a similar digital orthogonal signal detector to that shown in Fig. 1.

As shown in Fig. 2, the ground wave digital signal broadcast receiver provided with the digital orthogonal signal detector equivalent to the second embodiment (hereinafter called the second embodiment) is based upon the ground wave digital signal broadcast receiver provided with the digital orthogonal signal detector equivalent to the first embodiment shown in Fig. 1 (hereinafter called the first embodiment) and has the same configuration as the first embodiment except that a one-circuit two-contacts change-over switch 11 is newly connected between an analog-to-digital converter 4 and the digital orthogonal signal detector 1. Therefore, a further detailed description of the configuration of the second embodiment is omitted.

In Fig. 2, the same reference numbers are allocated to the same components as those shown in Fig. 1.

The operation of the second embodiment will be described below.

In the second embodiment, as operation between a receiving antenna 6 receiving a ground wave digital broadcast signal and the analog-to-digital converter 4 outputs a digital signal having a sampling frequency fs is the same as the operation in the first embodiment and the description is duplicate, a description of the equivalent operation in the second embodiment is omitted.

Next, the digital signal having the sampling frequency fs output from the analog-to-digital converter 4 is supplied to the change-over switch 11. The change-over switch 11 thins out the supplied digital signal into order 2 by switching the variable contact and converts it to two digital signals having a sampling frequency fs/2. The converted two digital signals are respectively supplied to an infinite impulse response digital filter 7 and a digital signal delay circuit 8 respectively of the digital orthogonal signal detector 1.

Afterward, each operation of the infinite impulse response digital filter 7 and the digital signal delay circuit 8 in the digital orthogonal signal detector 1 is the same as each operation of the infinite impulse response digital filter 7 and the digital signal delay circuit 8 in the first embodiment, then each operation of a fast Fourier transform circuit 9 and an orthogonal frequency division multiplex demodulator circuit 10 in an orthogonal frequency division multiplex detector 2 is the same as each operation of the fast Fourier transform circuit 9 and the orthogonal frequency division multiplex demodulator circuit 10 in the first embodiment, and the description is duplicate. Therefore, a description of the equivalent operation in the second embodiment is also omitted.

In the second embodiment, the change-over switch 11 is required extra, compared with the first embodiment, however, as a digital signal supplied to the digital orthogonal signal detector 1 is a digital signal acquired by thinning out into order 2, the operational rate of the infinite impulse response digital filter 7 and the digital signal delay circuit 8 is reduced, and power consumption can be reduced as much.

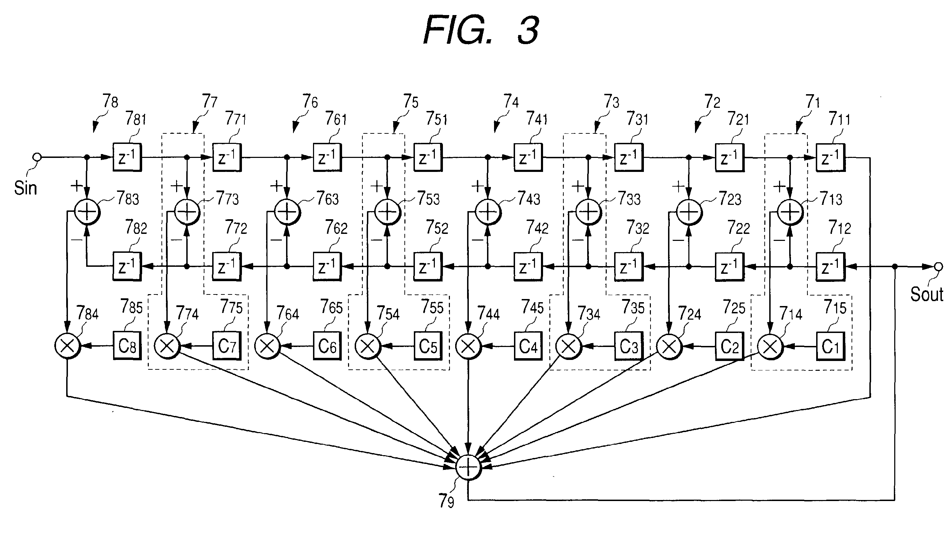

Next, Fig. 3 is a circuit diagram showing a first example of the concrete configuration of the infinite impulse response digital filter 7 used in the digital orthogonal signal detector 1 shown in Figs. 1 and 2.

As shown in Fig. 3, the infinite impulse response digital filter 7 is provided with a filter input terminal Sin, a filter output terminal Sout, eight signal processing units 7₁ to 7₈ connected by a cascade from the output side to the input side and a common adder 7₉. In this case, each of the signal processing units 7₁ to 7₈ is composed of each of first delay units 7₁₁ to 7₈₁, each of second delay units 7₁₂ to 7₈₂ each of adding units 7₁₃ to 7₈₃, each of multiplying units 7₁₄ to 7₈₄ and each of multiplication coefficient generating units 7₁₅ to 7₈₅, and in each of the signal processing units 7₁ to 7₈, each of the first delay units 7₁₁ to 7₈₁, each of the second delay units 7₁₂ to 7₈₂, each of the adding units 7₁₃ to 7₈₃, each of the multiplying units 7₁₄ to 7₈₄ and each of the multiplication coefficient generating units 7₁₅ to 7₈₅ are mutually connected as shown in Fig. 3.

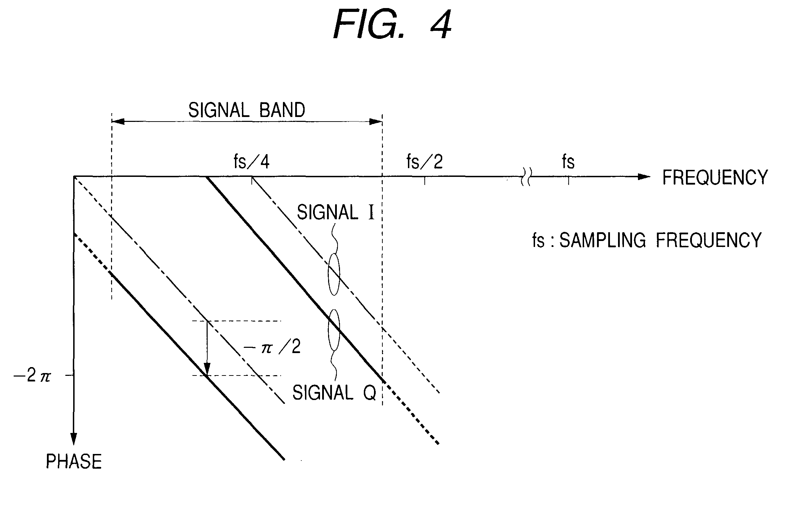

Fig. 4 is an explanatory drawing for explaining a state of the variation of the output phase of the infinite impulse response digital filter 7 having an all-pass characteristic and also shows a state of the variation of the output phase of the digital signal delay circuit 8.

In Fig. 4, a vertical axis shows a phase, an axis of abscissas shows a frequency, a full line shows a state of the variation of the phase of the infinite impulse response digital filter 7 and an alternate long and short dash line shows a state of the variation of the phase of the digital signal delay circuit 8.

As shown in Fig. 4, in a signal band (a range shown by a dotted line) having a frequency fs/4 equivalent to 1/4 of a sampling frequency fs in the center, for a state of the variation of a phase in the digital signal delay circuit 8, a phase value linearly varies from the lower limit frequency value to the upper limit frequency value in the signal band, when the phase value reaches -2π, it jumps to a phase value 0 and as a frequency value approaches the upper limit frequency value, a phase value linearly varies again. In the meantime, for a state of the variation of a phase in the infinite impulse response digital filter 7, a phase value also linearly varies at the same phase gradient as that of the digital signal delay circuit 8 from the lower limit frequency value to the upper limit frequency value in the signal band, when the phase value reaches -2π, it jumps to a phase value 0 and as a frequency value approaches the upper limit frequency value, a phase value linearly varies again and the phase difference between the phase value of the infinite impulse response digital filter 7 and that of the digital signal delay circuit 8 is always - (π/2) in the signal band, that is, -90°.

In this case, the rate of the variation of a phase to the variation of a frequency is a phase gradient and the phase gradient shows how many times the variation of a phase every -2π occurs while a frequency varies from 0 to fs. For example, if cumulative phases while a frequency varies from 0 to fs are -6π, the phase gradient is 3.

A phase gradient is also group delay time by the definition and is delay time in units of sampling time. For example, if the phase gradient is 3, group delay is three clocks.

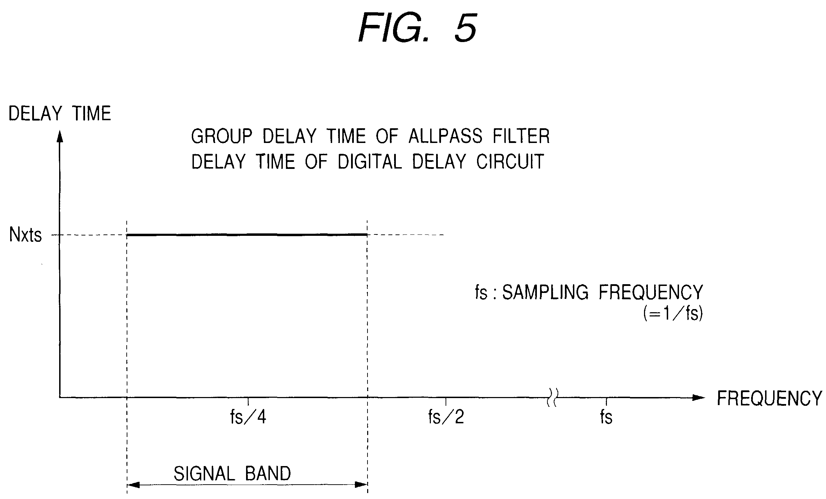

Next, Fig. 5 is an explanatory drawing for explaining the group delay characteristic of the infinite impulse response digital filter 7 and also shows the delay characteristic of the digital signal delay circuit 8.

As shown in Fig. 5, a vertical axis shows delay time, the axis of abscissas shows a frequency and a full line shows the group delay characteristic of the infinite impulse response digital filter 7 and the digital signal delay circuit 8.

As shown in Fig. 5, in a signal band (a range shown by a dotted line) having a frequency fs/4 equivalent to 1/4 of a sampling frequency fs in the center, the group delay characteristic of the infinite impulse response digital filter 7 and the group delay time of the digital signal delay circuit 8 show the same fixed value of "N × ts" (N: number of phase gradients, ts: sampling time).

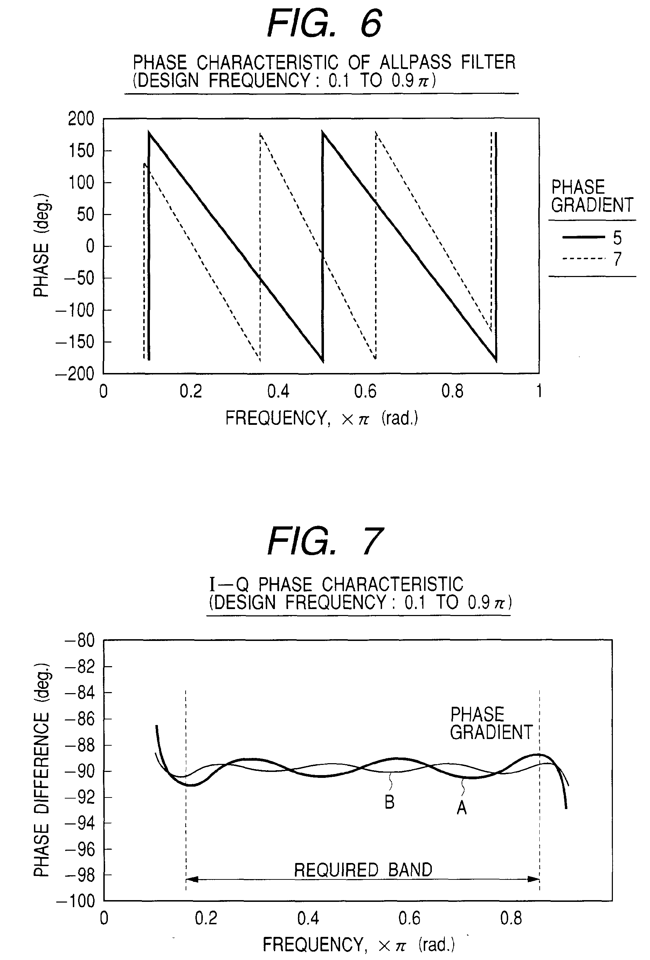

Next, Fig. 6 is a characteristic drawing showing a state of the variation of a phase when the number of phase gradients in a frequency band is varied in the infinite impulse response digital filter 7.

As shown in Fig. 6, a vertical axis shows a phase represented by a degree, the axis of abscissas shows a frequency (2π radian corresponds to a sampling frequency) represented by radian, a full line shows a state of the variation of a phase when the number of phase gradients of the infinite impulse response digital filter 7 is 5 and a dotted line shows a state of the variation of a phase when the number of phase gradients of the infinite impulse response digital filter 7 is 7.

As shown in Fig. 6, a state of the variation of a phase in the infinite impulse response digital filter 7 becomes linear in the frequency band (0.1π to 0.9π radian) of a digital signal by suitably selecting the delay constant of each first delay unit and each second delay unit composing the infinite impulse response digital filter 7 and the coefficient of each multiplication coefficient generating unit, and the number of phase gradients in the overall frequency band (0 to 2π radian) becomes 5 or 7.

Next, Fig. 7 is a characteristic drawing showing a state of the variation of the phase difference between a phase in the infinite impulse response digital filter 7 and a phase in the digital signal delay circuit 8 in the signal band shown in Fig. 6 of the infinite impulse response digital filter 7.

As shown in Fig. 7, a vertical axis shows phase difference represented by a degree, the axis of abscissas shows a frequency represented by radian, a curve A shows a state of the variation of phase difference when the number of phase gradients of the infinite impulse response digital filter 7 is 5 and a curve B shows a state of the variation of phase difference when the number of phase gradients of the infinite impulse response digital filter 7 is 7.

The curves A and B shown in Fig. 7 show that phase difference is in the vicinity of -90° though the infinite impulse response digital filter 7 has 5 or 7 parts in which phase difference varies in the frequency band (0.1π to 0.9π radian) of a digital signal.

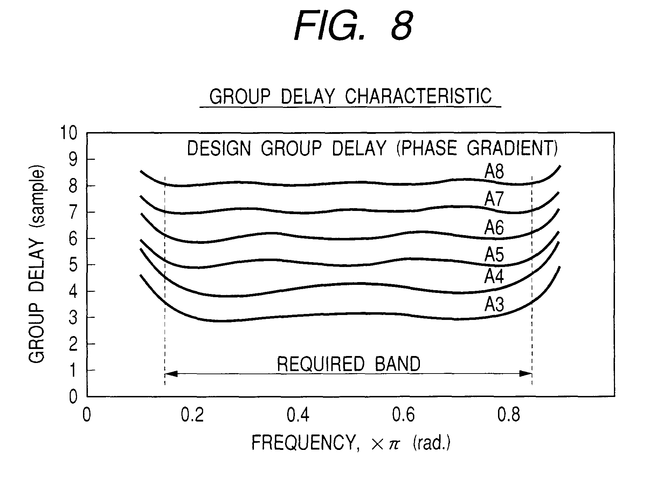

Next, Fig. 8 is a characteristic drawing showing a state of the variation of group delay when the number of phase gradients is a parameter in the infinite impulse response digital filter 7.

As shown in Fig. 8, a vertical axis shows group delay represented using the number of samples as a criterion, the axis of abscissas shows a frequency represented by radian and curves A3 to A8 show a state of the variation of group delay when the number of phase gradients of the infinite impulse response digital filter 7 is 3 to 8.

The curves A3 to A8 in Fig. 8 show that in a frequency band (0.1π to 0.9π radian) of a digital signal, though the variation of the group delay of the infinite impulse response digital filter 7 sequentially decreases as the number of phase gradients varies from 3 to 8, the variation is in a limited range as a whole.

As described above, according to the infinite impulse response digital filter 7 in the first example, if the delay constant of each first delay unit and each second delay unit and the coefficient of each multiplication coefficient generating unit are suitably selected so that the number of phase gradients of the infinite impulse response digital filter 7 is 3 or more for example, the phase difference between a Q signal output from the infinite impulse response digital filter 7 and an I signal output from the digital signal delay circuit 8 can be substantially 90° in a frequency band of a digital signal and the group delay of the Q signal and I signal can be substantially equalized. As the infinite impulse response digital filter 7 is used to acquire a Q signal, a simple circuit configuration in which the number of components is reduced is acquired, thereby, an occupied volume is reduced and power consumption can be reduced as compared with the this type of well-known circuit.

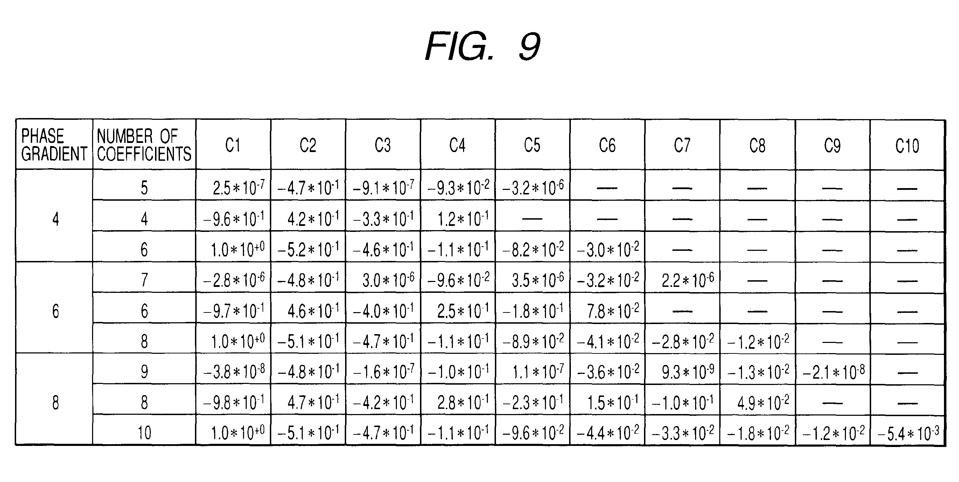

Next, Fig. 9 is a list showing one example of coefficient values set by the multiplication coefficient generating unit when the number of caused phase gradients and the number of arranged signal processing units are determined in the infinite impulse response digital filter 7.

As shown in Fig. 9, a field on the leftmost side shows the number of phase gradients (mentioned as phase gradient in the list) and the next field shows the number of arranged signal processing units (mentioned as the number of coefficients in the list) . The next field shows a coefficient value set by the multiplication coefficient generating unit (mentioned as coefficients C1, C2, ---, C8 respectively shown in the multiplication coefficient generating units shown in Fig. 3 in the list and the coefficient of each multiplication coefficient generating unit of ninth and tenth signal processing units not shown in Fig. 3 is mentioned as C9 and C10).

As shown in Fig. 9, in an example of the highest field, when the number of phase gradients is 4 and the number of coefficients is 5, a coefficient C1 is set to 2.5 × 10⁻⁷, a coefficient C2 is set to -0.4 × 10⁻¹, a coefficient C3 is set to -9.1 × 10⁻⁷, a coefficient C4 is set to -9.3 × 10⁻² and a coefficient C5 is set to -3.2 × 10⁻⁶. Similarly, in an example of a second or the succeeding fields, coefficients C1 to C10 of the number matched with the number of coefficients are also respectively set to values shown in the list according to the number of phase gradients and the number of coefficients.

When the coefficient values of coefficients C1 to C10 shown in Fig. 9 are referred, the coefficient values of coefficients C1, C3, C5, C7 and C9 equivalent to odd ordinals when the number of phase gradients is 4 and the number of coefficients is 5, when the number of phase gradients is 6 and the number of coefficients is 7 and when the number of phase gradients is 8 and the number of coefficients is 9, are 10⁻⁶, 10⁻⁷, 10⁻⁸, and 10⁻⁹ in a numeric value including an exponent and if the number of effective digits is 5, each coefficient value including these numeric values substantially shows zero.

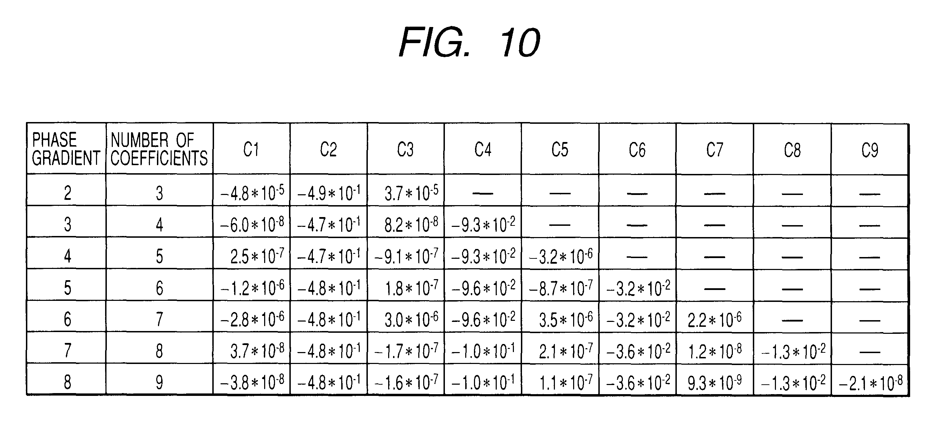

Next, Fig. 10 is a list showing relation among the number of phase gradients, the number of coefficients and the coefficient value of each coefficient respectively shown in Fig. 9 in a more general state.

As shown in Fig. 10, a field on the leftmost side shows the number of phase gradients, the next field shows the number of coefficients, the next field shows coefficients C1, C2, ..., C9 and shows the coefficient value of each coefficient C1, C2, ..., C9 in the combination of the number of phase gradients and the number of coefficients where when the number of phase gradients is n, the number of coefficients is n + 1.

As shown in Fig. 10, the coefficient values of coefficients C1, C3, C5, C7 and C9 equivalent to odd ordinals in the combination that the number of phase gradients is m and the number of coefficients is m + 1 larger by one and in the combination that the number of phase gradients is 2 to 8 and the number of coefficients corresponding to it is 3 to 9 are 10⁻⁵, 10⁻⁶, 10⁻⁷, 10⁻⁸ and 10⁻⁹ in a numeric value including an exponent and each coefficient value including these numeric values is substantially zero.

If the coefficient of the multiplication coefficient generating unit is zero in such a relation between the number of phase gradients and the number of coefficients, not only multiplication output data from the multiplying unit that multiplies a coefficient zero output from the multiplication coefficient generating unit is zero but output data from the adding unit input to the multiplying unit is not required, therefore, adding units 7₁₃, 7₃₃, 7₅₃, 7₇₃ and others, the multiplying units 7₁₄, 7₃₄, 7₅₄, 7₇₄ and others and the multiplication coefficient generating units 7₁₅, 7₃₅, 7₅₅, 7₇₅ and others are not required to be provided in the signal processing units provided with the multiplication coefficient generating units of which the coefficient is zero, that is, the signal processing units 7₁, 7₃, 7₅, 7₇ and others equivalent to odd ordinals and these can be omitted.

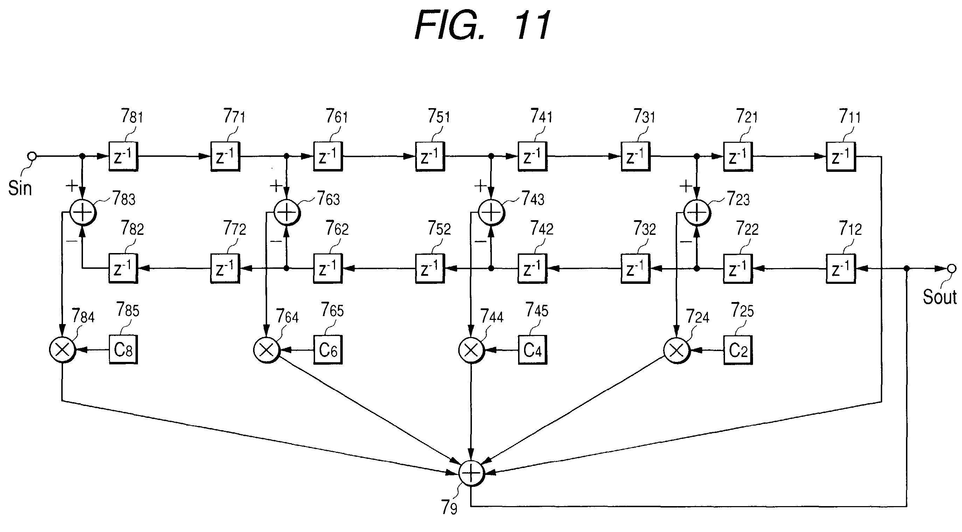

Fig. 11 is a circuit diagram showing a second example of the concrete configuration of the infinite impulse response digital filter 7 used in the digital orthogonal signal detector 1 shown in Figs. 1 and 2, shows the example that the number of phase gradients is 7 and the number of coefficients is 8, and adding units 7₁₃, 7₃₃, 7₅₃ and 7₇₃, multiplying units 7₁₄, 7₃₄, 7₅₄ and 7₇₄ and multiplication coefficient generating units 7₁₅, 7₃₅, 7₅₅ and 7₇₅ in signal processing units 7₁, 7₃, 7₅ and 7₇ equivalent to odd ordinals are omitted.

As shown in Fig. 11, the same reference numbers are allocated to the same components as those shown in Fig. 3.

When the infinite impulse response digital filter 7 in the second example (hereinafter called the second example) shown in Fig. 11 is compared with the infinite impulse response digital filter 7 in the first example (hereinafter called the first example) shown in Fig. 3, the adding units 7₁₃, 7₃₃, 7₅₃ and 7₇₃, the multiplying units 7₁₄, 7₃₄, 7₅₄ and 7₇₄ and multiplication coefficient generating units 7₁₅, 7₃₅, 7₅₅ and 7₇₅ in signal processing units 7₁, 7₃, 7₅ and 7₇ in the signal processing units 7₁, 7₃, 7₅ and 7₇ equivalent to odd ordinals (respectively shown in the dotted line in Fig. 3) in the first example are omitted in the second example, and the second example and the first example are equal in the configuration except for that point. Therefore, a further description of the configuration of the infinite impulse response digital filter 7 in the second example is omitted.

The operation of the infinite impulse response digital filter 7 in the second example is substantially equal to the operation of the infinite impulse response digital filter 7 in the first example corresponding to the abovementioned operation, and a state of the variation of a phase and a state of the variation of group delay in the infinite impulse response digital filter 7 in the second example are also substantially equal to those of the infinite impulse response digital filter 7 in the first example. Therefore, a description of the operation of the infinite impulse response digital filter 7 in the second example is omitted.

As in the infinite impulse response digital filter 7 in the second example, adding units 7₁₃, 7₃₃, 7₅₃, 7₇₃ and others, multiplying units 7₁₄, 7₃₄, 7₅₄, 7₇₄ and others and multiplication coefficient generating units 7₁₅, 7₃₅, 7₅₅, 7₇₅ and others in signal processing units 7₁, 7₃, 7₅, 7₇ and others equivalent to odd ordinals can be omitted as compared with the infinite impulse response digital filter 7 in the first example, the number of components is further reduced, simpler circuit configuration is acquired, an occupied volume is further reduced as much and power consumption can also be further reduced as much.

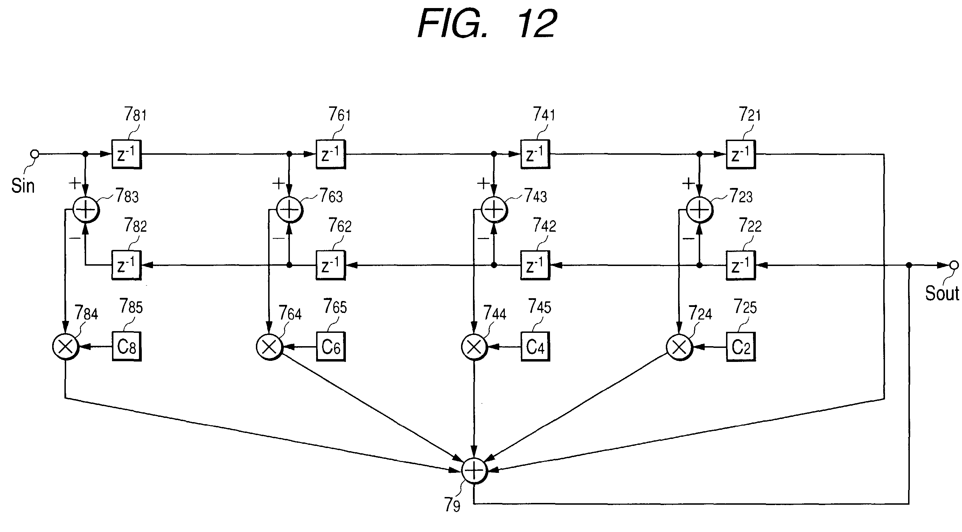

Next, Fig. 12 is a circuit diagram showing a third example of the concrete configuration of the infinite impulse response digital filter 7 used in the digital orthogonal signal detector 1 shown in Figs. 1 and 2 and shows a case where the number of phase gradients is 7, the number of coefficients is 8 and a frequency fs/2 equivalent to a half of a sampling frequency fs of a digital signal is selected as the operating frequency of the infinite impulse response digital filter 7 to thin out the output of the filter into order 2.

As shown in Fig. 12, the same numbers are allocated to the same components as those shown in Fig. 3.

When the infinite impulse response digital filter 7 in the third example (hereinafter called the third example) shown in Fig. 12 and the infinite impulse response digital filter 7 in the second example (hereinafter called the second example again) shown in Fig. 11 are compared, first delay units 7₁₁, 7₃₁, 7₅₁ and 7₇₁ and second delay units 7₁₂, 7₃₂, 7₅₂ and 7₇₂ in signal processing units 7₁, 7₃, 7₅ and 7₇ in the signal processing units 7₁, 7₃, 7₅ and 7₇ equivalent to odd ordinals in the second example are omitted together with the adding units 7₁₃, 7₃₃, 7₅₃ and 7₇₃, the multiplying units 7₁₄, 7₃₄, 7₅₄ and 7₇₄ and the multiplication coefficient generating units 7₁₅, 7₃₅, 7₅₅ and 7₇₅ in the third example, and the third example and the second example are equal in the configuration except for that point. Therefore, a further description of the configuration of the infinite impulse response digital filter 7 in the third example is omitted.

The operation of the infinite impulse response digital filter 7 in the third example is substantially equal to the operation of the infinite impulse response digital filter 7 in the second example except that the operating frequency is 1/2, and a state of the variation of a phase and a state of the variation of group delay in the infinite impulse response digital filter 7 in the third example are also substantially equal to those of the infinite impulse response digital filter 7 in the second example. Therefore, a description of the operation of the infinite impulse response digital filter 7 in the third example is omitted.

As in the infinite impulse response digital filter 7 in the third example, not only adding units 7₁₃, 7₃₃, 7₅₃, 7₇₃ and others, multiplying units 7₁₄, 7₃₄, 7₅₄, 7₇₄ and others and multiplication coefficient generating units 7₁₅, 7₃₅, 7₅₅, 7₇₅ and others in signal processing units 7₁, 7₃, 7₅, 7₇ and others equivalent to odd ordinals can be omitted but first delay units 7₁₁, 7₃₁, 7₅₁, 7₇₁ and others and second delay units 7₁₂, 7₃₂, 7₅₂, 7₇₂ and others can be omitted together as compared with the infinite impulse response digital filter 7 in the second example, the number of components is greatly reduced, a simpler circuit configuration is acquired, an occupied volume is further reduced as much and power consumption can also be greatly reduced as much. As an occupied volume is further reduced, the manufacturing cost can be further reduced. As the operating frequency of the third example is 1/2 as compared with those of the first example and the second example, a rate at which power consumption is reduced is increased.

As described above, according to the invention according to the first aspect, as the digital orthogonal signal detector is composed of one system of a digital signal delay circuit that generates an I signal and one system of a digital all-pass filter that generates a Q signal and the infinite impulse response digital filter is used for the digital all-pass filter, there is an effect that the digital orthogonal signal detector can be acquired in which not only the number of required circuits is greatly reduced, compared with this type of well-known digital orthogonal signal detector but the number of components is reduced, a simple circuit configuration is acquired because the infinite impulse response digital filter having smaller filter order (the number of signal processing units) as compared with a finite impulse response digital filter is used, occupied volume is reduced and power consumption can be reduced.

Also, according to the invention according to the second aspect, the effect acquired by the invention according to the first aspect can be expected, and in addition, a processed digital signal is a digital signal thinned out into order 2 and each operational rate of the digital signal delay circuit and the digital all-pass filter is reduced. Therefore, further more power consumption can be reduced as compared with the degree of the reduction of power consumption which can be expected in the invention according to the first aspect.

Further, according to the invention according to the third aspect, as the number of phase gradients in the infinite impulse response digital filter is selected so that the number is "n - 1" while the number of cascaded signal processing units is n, there is an effect that the digital orthogonal signal detector having a satisfactory conversion characteristic is acquired in addition to the effect acquired in the invention according to the first aspect.

Also, according to the invention according to the fourth aspect, as signal processing units equivalent to odd ordinals from the output side out of cascaded n pieces of signal processing units are respectively composed of only the first delay unit and the second delay unit, there is an effect that the digital orthogonal signal detector is acquired in which the number of components is greatly reduced due to the omission of the adding units, the multiplying units and the multiplication coefficient generating units of the signal processing units equivalent to odd ordinals to result in a simpler circuit configuration, an occupied volume is further reduced and power consumption can be further reduced.

Further, according to the invention according to the fifth aspect, as 1/2 of a sampling frequency is selected as the operating frequency of the infinite impulse response digital filter and cascaded n pieces of signal processing units are composed of only signal processing units equivalent to even ordinals from the output side, there is an effect that the digital orthogonal signal detector is acquired in which the number of components is greatly reduced due to the omission of all the signal processing units equivalent to odd ordinals to result in a simple circuit configuration, an occupied volume is further reduced, the operating frequency is reduced and power consumption can be greatly reduced.

## Claims

1. A digital orthogonal signal detector, comprising:
a digital signal delay circuit that delays a digital signal output from an analog-to-digital converter for converting a received signal of which a center frequency is not zero from analog to digital at a predetermined sampling frequency and generates an in-phase signal; and
a digital all-pass filter that shifts a phase of the digital signal by 90° and generates an orthogonal signal, wherein
the digital all-pass filter is an infinite impulse response digital filter having a fixed group delay characteristic, and wherein
the digital signal delay circuit has a signal delay amount equal to a group delay amount of the digital all-pass filter.

2. A digital orthogonal signal detector, comprising:
a digital signal delay circuit that delays one of digital signals acquired by thinning out a digital signal output from an analog-to-digital converter for converting a received signal of which a center frequency is not zero from analog to digital at a predetermined sampling frequency into order 2 and generates an in-phase signal; and
a digital all-pass filter that shifts the phase of the other of the digital signals thinned out into the order 2 by 90° and generates an orthogonal signal, wherein
the digital all-pass filter is an infinite impulse response digital filter having a fixed group delay characteristic, and wherein
the digital signal delay circuit has a signal delay amount equal to a group delay amount of the digital all-pass filter.

3. A digital orthogonal signal detector according to Claim 1 or 2, wherein
three or more cascaded arbitrary n (n: integer) pieces of signal processing units in the infinite impulse response digital filter are respectively provided with a first delay unit, a second delay unit, an adding unit, a multiplying unit and a multiplication coefficient generating unit, and wherein
a constant of each unit is set so that a number of phase gradients caused in a signal band having 1/4 of the sampling frequency in the center is "n - 1".

4. A digital orthogonal signal detector according to Claim 3, wherein
signal processing units equivalent to odd ordinals from the output side out of the cascaded n pieces of signal processing units are respectively composed of only a first delay unit and a second delay unit.

5. A digital orthogonal signal detector according to Claim 3, wherein
in the case where the output of the infinite impulse response digital filter is thinned out into order 2, 1/2 of the sampling frequency is selected as an operating frequency of the infinite impulse response digital filter and wherein
the cascaded n pieces of signal processing units are composed of only signal processing units equivalent to even ordinals from the output side.
